Europäisches Patentamt

European Patent Office

Office européen des brevets

(11) Veröffentlichungsnummer : **0 362 540 B1**

## (12) EUROPÄISCHE PATENTSCHRIFT

(45) Veröffentlichungstag der Patentschrift :
**01.04.92 Patentblatt 92/14**

(21) Anmeldenummer : **89115670.5**

(22) Anmeldetag : **25.08.89**

(51) Int. Cl.$^5$ : **F16F 7/08, D06F 37/20**

(54) **Reibungsdämpfer.**

(30) Priorität : **07.10.88 DE 3834127**

(43) Veröffentlichungstag der Anmeldung :
**11.04.90 Patentblatt 90/15**

(45) Bekanntmachung des Hinweises auf die
Patenterteilung :
**01.04.92 Patentblatt 92/14**

(84) Benannte Vertragsstaaten :
**DE ES FR GB IT SE**

(56) Entgegenhaltungen :
**DE-A- 2 421 007**
**DE-A- 3 513 838**
**FR-A- 1 336 185**
**FR-A- 1 570 563**

(73) Patentinhaber : **SUSPA COMPART**
**Aktiengesellschaft**
**Industriestrasse 12-14**
**W-8503 Altdorf (DE)**

(72) Erfinder : **Bauer, Hans-Peter**
**Ziegelhütte 9**
**W-8503 Altdorf (DE)**
Erfinder : **Bauer, Hans Jürgen**
**Am Eichenhain 8**
**W-8503 Altdorf (DE)**
Erfinder : **Stadelmann, Ludwig**
**Schopperstrasse 14**
**W-8503 Altdorf (DE)**
Erfinder : **Mayer, Dieter**
**Schillerstrasse 20**
**W-8458 Sulzbach-Rosenberg (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

## Beschreibung

Die Erfindung betrifft einen Reibungsdämpfer nach dem Oberbegriff des Anspruches 1. Derartige Reibungsdämpfer sind aus der US-A-4 765 444 und der DE-A 35 13 838 bekannt. Diese geschmierten Reibungsdämpfer haben sich in der Praxis in großem Umfang außerordentlich bewährt; sie werden insbesondere in großem Maße in Waschmaschinen eingesetzt. Die Reibungsbeläge bestehen hierbei üblicherweise aus zelligem geschäumten Kunststoff, wobei die Zellen des Kunststoffes mit Fett imprägniert sind. Es hat sich gezeigt, daß bei extremen Belastungen nach längerer Zeit die Reibung von einer geschmierten in eine trockene Reibung übergeht, d.h. der Reibungsdämpfer erwärmt sich sehr stark. Die Dämpfung fällt hierbei ab.

Der Erfindung liegt daher die Aufgabe zugrunde, den Reibungsdämpfer der gattungsgemäßen Art so weiterzubilden, daß ein Abfall der Dämpfung durch Übergang von einer geschmierten in eine trockene Reibung ausgeschlossen wird.

Diese Aufgabe wird erfindungsgemäß durch die Merkmale im Kennzeichnungsteil des Anspruches 1 gelöst. Durch den erfindungsgemäß vorgesehenen Verlängerungsstutzen wird verhindert, daß das Schmierfett sich im Gehäuse an nicht mit dem Reibungsbelag in Verbindung kommenden Stellen ablagert. Insbesondere kann das Fett nicht in den Hohlraum des Stößels gelangen, wo es nicht mehr zur Schmierung herangezogen wird. An der Innenwand des Gehäuses beim Ausfahren des Stößels aus dem Gehäuse verteiltes Schmierfett wird so mit Sicherheit beim Einfahren des Stößels immer wieder eingesammelt. In der Schmierfett-Sammelkammer kann von Anfang an eine Schmierfettfüllung vorgesehen sein. Weiterhin kann am Reibungskolben eine relativ großvolumige Schmierfett-Kammer ausgebildet werden, ohne daß die Gefahr besteht, daß dieses Schmierfett ebenfalls nur verloren geht.

Weitere Merkmale, Vorteile und Einzelheiten der Erfindung ergeben sich aus der nachfolgenden Beschreibung von zwei Ausführungsbeispielen anhand der Zeichnung. Es zeigt

Fig. 1 einen Reibungsdämpfer gemäß der Erfindung im Längsschnitt,

Fig. 2 einen Teil-Längsschnitt durch einen Reibungsdämpfer mit einer abgewandelten Ausführungsform des Stößels und

Fig. 3 einen Querschnitt durch die Ausführungsform nach Fig. 2 entsprechend der Schnittlinie III-III in Fig. 2.

Der in der Zeichnung dargestellte Reibungsdämpfer weist ein Gehäuse 1 und einen Stößel 2 auf. Das Gehäuse 1 besteht im wesentlichen aus einem zylindrischen metallischen Rohr 3, das an einem Ende mittels eines Bodens 4 verschlossen ist. An der Außenseite des Bodens 4 ist eine Gelenkbüchse 5 zum Anlenken des Reibungsdämpfers angebracht. Diese Gelenkbüchse 5 weist eine als Schwenkachse dienende Symmetrieachse 6 auf, die die Mittel-Längs-Achse 7 des Reibungsdämpfers senkrecht schneidet.

Der Stößel 2 weist an seinem äußeren Ende ebenfalls eine Gelenkbüchse 8 auf, deren Achse 9 ebenfalls die Mittel-Längs-Achse 7 senkrecht schneidet. Der Stößel 2 selber besteht im wesentlichen aus einem sich zur Gelenkbüchse 8 hin verjüngenden Rohr 10, das auf seiner Außenseite mittels Längsrippen 11 versteift ist. Das Rohr 10 ist mit einer Entlüftungsöffnung 12 versehen. Der Stößel 2 ist einstückig aus Kunststoff gespritzt.

Am im Gehäuse 1 befindlichen inneren Ende des Stößels 2 ist ein Reibungskolben 13 ausgebildet, der ringförmige, im Abstand voneinander ausgebildete und einander paarweise zugeordnete Gegenhalteflansche 14, 15 und 16, 17 aufweist. Zwischen den einander jeweils zugeordneten Gegenhalteflansche 14, 15 bzw. 16, 17 sind etwa kreiszylindrische Auflage-Abschnitte 18, 19 ausgebildet, die ebenfalls konzentrisch zur Achse 7 angeordnet sind. Auf den Auflage-Abschnitten 18, 19 ist jeweils ein Reibungsbelag 20, 21 angeordnet. Diese Reibungsbeläge 20, 21 bestehen aus einem zelligen, elastischen Schaumstoff, beispielsweise einem Polyuretan-Schaumstoff.

Zwischen den beiden einander benachbarten Gegenhalteflanschen 15, 16, also auch zwischen den Reibungsbelägen 20, 21 ist eine im Verhältnis zum Volumen eines Reibbelages 20 bzw. 21 relativ großvolumige ringnutförmige Schmierfett-Kammer 22 ausgebildet, deren Boden 23 axial etwa mit den Auflage-Abschnitten 18, 19 fluchtet. Ihre axiale Erstreckung a, die durch den Abstand der einander benachbarten Gegenhalteflansche 15, 16 bedingt ist, beträgt etwa 30 bis 100 % der axialen Erstreckung b der Reibungsbeläge 20 bzw. 21. Ihr Volumen beträgt daher ebenfalls etwa 30 bis 100 % des Volumens eines Reibungsbelages 20 bzw. 21 in eingebautem Zustand.

Am inneren Ende des Stößels 2 ist ein Verlängerungsstutzen 24 angeformt, der sich axial um ein Maß c über den endseitigen Gegenhalteflansch 17 erstreckt, das etwa der Erstreckung b entspricht. Der Verlängerungsstutzen 24 kann sich zu seinem freien Ende hin zur Mittel-Längs-Achse 7 leicht verjüngen, so daß eine zum Innenraum 25 des Gehäuses 1 hin offene, durch den Verlängerungsstutzen 24, den zugeordneten Gegenhalteflansch 17 und die Innenwand 26 des Rohres 3 begrenzte Schmierfett-Sammelkammer 27 gebildet wird. Diese ist ebenfalls, allerdings nur zu einem Teil, mit Schmierfett gefüllt.

Das Rohr 3 ist an seinem freien Ende mit einer nach innen gerichteten Sicke 28 versehen, die nach dem

2

Einschieben des Stößels 2 in das Gehäuse 1 angebracht wird, um ein unbeabsichtigtes Herausziehen des Stößels 2 aus dem Gehäuse 1 zu verhindern.

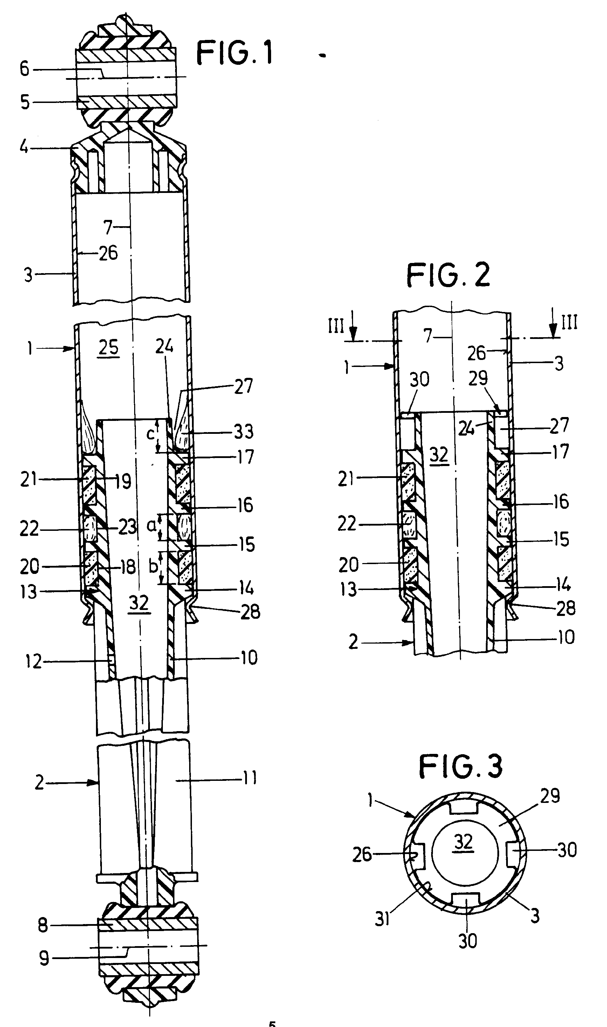

Bei der abgewandelten Ausführungsform nach den Fig. 2 und 3 ist am freien Ende des Verlängerungsstutzens 24 noch ein Führungsring 29 angebracht, der segmentartige Ausnehmungen 30 aufweist, so daß er einerseits über seinen Umfang verteilt mehrere an der Innenwand 26 anliegende Führungsflächen 31 zur zusätzlichen radialen Führung des Reibungskolbens 13 aufweist. Andererseits kann bei einer aus dem Gehäuse 1 herausgerichteten Bewegung des Stößels 2 Schmierfett aus der Sammelkammer 27 austreten und auf der Innenwand 26 verbleiben, das andererseits bei einer in das Gehäuse 1 hineingerichteten Bewegung des Stößels 2 wieder in die Sammelkammer 27 zurückkommt. Es ist bei beiden dargestellten Ausführungsformen weitestgehend ausgeschlossen, daß Schmierfett in den Hohlraum 32 des Stößels 2 gelangt und dort nicht mehr für den Schmierprozeß zur Verfügung steht.

In Fig. 1 ist angedeutet, wie in der Schmierfett-Sammelkammer 27 befindliches Schmierfett 33 beim Ausfahren des Stößels 2 aus dem Gehäuse 1 an der Innenwand 26 ausgezogen wird. Es ist weiterhin erkennbar, daß es bei dieser Ausgestaltung nicht in den Hohlraum 32 des Stößels 2 gelangen kann.

## Patentansprüche

1. Reibungsdämpfer, insbesondere für Waschmaschinen mit Schleudergang, bestehend aus einem im wesentlichen kreiszylindrischen Gehäuse (13) und einem koaxial in diesem verschiebbaren, mit einem Ende aus dem Gehäuse herausgeführten und am anderen Ende mit einem etwa zylindrischen Reibungskolben (13) versehenen Stößel (2), wobei der Reibungskolben (13) mindestens einen etwa kreiszylindrischen Auflage-Abschnitt (18,19) und diesen radial überragende und axial abstandsunveränderbar begrenzte Gegenhalteflansche (14,15,16,17) aufweist, wobei auf dem Auflage-Abschnitt (18,19) und zwischen den Gegenhalteflanschen ein elastisch gegen die Innenwand des Gehäuses angedrückter Reibungsbelag (20,21) aus elastisch nachgiebigem Material angeordnet ist, und wobei am Reibungskolben (13) eine zur Innenwand des Gehäuses offene Schmierfett-Kammer (22) ausgebildet ist, dadurch gekennzeichnet, daß an dem im Gehäuse (1) befindlichen Ende des Stößels (2) ein Verlängerungsstutzen (24) ausgebildet ist, der gemeinsam mit dem benachbarten Gegenhalteflansch (17) und der Innenwand (26) des Gehäuses (1) eine Schmierfett-Sammelkammer (27) begrenzt.

2. Reibungsdämpfer nach Anspruch 1, dadurch gekennzeichnet, daß der Verlängerungsstutzen (24) sich zu seinem freien Ende nach innen verjüngt.

3. Reibungsdämpfer nach Anspruch 1 oder 2, dadurch gekennzeichnet, daß am freien Ende des Verlängerungsstutzens (24) ein mit Führungsflächen (31) an der Innenwand (26) des Gehäuses (1) anliegender Führungsring (29) ausgebildet ist, der mit zur Innenwand (26) hin offenen Ausnehmungen (30) versehen ist.

4. Reibungsdämpfer nach einem der Ansprüche 1 bis 3, dadurch gekennzeichnet, daß die Schmierfett-Sammelkammer (27) teilweise mit Schmierfett (33) gefüllt ist.

5. Reibungsdämpfer nach einem der Ansprüche 1 bis 4, dadurch gekennzeichnet, daß auf der dem Verlängerungsstutzen (24) abgewandten Seite des Reibungsbelages (20 oder 21) eine Schmierfett-Kammer (22) angeordnet ist, deren Volumen mindestens 30 % des Volumens des Reibungsbelages (20 oder 21) beträgt.

6. Reibungsdämpfer nach einem der Ansprüche 1 bis 5, dadurch gekennzeichnet daß der Reibungsbelag (20 bzw. 21) aus zelligem geschäumten Kunststoff besteht.

## Claims

1. A frictional damper, in particular for washing machines with spinning action, comprising a substantially circular cylindrical housing (1, 3) and a tappet (2) which is coaxially displaceable inside it and extends out of it with one end, the other end being provided with an approximately cylindrical friction piston (13), the friction piston (13) having at least one approximately circular cylindrical support segment (18, 19) and bracing flanges (14, 15, 16, 17) radially extending beyond the latter, which bracing flanges (14, 15, 16, 17) are axially limited at fixed distances, a friction coating (20, 21) made of an elastically resilient material being disposed on the support segment (18, 19) and between the bracing flanges and being elastically pressed against the inner wall of the housing, and a grease chamber (22), open towards the inner wall of the housing and being formed on the friction piston (13), characterized in that an extension tube (24) is formed on the end of the tappet (2) which is inside the housing (1), which extension tube (24), together with the adjacent bracing flange (17) and the inner wall (26) of the housing (1) defines a grease collecting chamber (27).

2. A frictional damper in accordance with claim 1, characterized in that the extension tube (24) tapers inwardly in the direction towards its free end.

3. A frictional damper in accordance with claims 1 or 2, <u>characterized in that</u> a guide ring (29) is formed at the free end of the extension tube (24), which is provided with guide surfaces (31) and abuts against the inner wall (26) of the housing (1) and is provided with recesses (30) which are open towards the inner wall (26).

4. A frictional damper in accordance with one of claims 1 to 3, <u>characterized in that</u> the grease collecting chamber (27) is partially filled with grease (33).

5. A frictional damper in accordance with one of claims 1 to 4, <u>characterized in that</u> on the side of the friction coating (20 or 21) facing away from the extension tube (24), a grease chamber (22) is disposed, the volume of which is at least 30 % of the volume of the friction coating (20 or 21).

6. A frictional damper in accordance with one of claims 1 to 5, <u>characterized in that</u> the friction coating (20 or 21) consists of a cellular, foamed plastic.

**Revendications**

1. Amortisseur à friction, en particulier pour des machines à laver avec phase d'essorage, comprenant essentiellement un boîtier cylindrique circulaire (1, 3), une tige de piston (2) avec une extrémité sortant du boîtier et avec une autre extrémité pourvue d'un corps de piston (13), le corps de piston (13) comportant au moins une surface d'appui (18, 19) cylindrique circulaire ainsi que des collets de retenue (14, 15, 16, 17) faisant saillie radialement sur ce dernier et dont la distance axiale reste fixe, et dans lequel une garniture de friction (20, 21) en matière souple et élastique est fixée sur la surface d'appui (18, 19) et entre les collets de retenue contre la paroi interne du boîtier, et dans lequel une chambre à graisse (22) ouverte vers la paroi intérieure du boîtier est formée sur le piston de friction, caractérisé en ce qu'un prolongement tubulaire (24) est formé sur l'extrémité de la tige de piston (2) se trouvant dans le boîtier (1) qui, ensemble avec le collet de retenue adjacent (17) et la paroi intérieure (26) du boîtier (1), définit une chambre collectrice de graisse (27).

2. Amortisseur à friction selon la revendication 1, caractérisé en ce que le diamètre du prolongement tubulaire (24) diminue vers l'intérieur en direction de son extrémité libre.

3. Amortisseur à friction selon l'une quelconque des revendications 1 ou 2, caractérisé en ce qu'à l'extrémité libre du prolongement tubulaire (24) est formé un anneau de guidage (29) reposant par des faces de guidage (31) sur la paroi intérieure (26) du boîtier (1) et qui est muni d'encoches (30) ouvertes vers la paroi intérieure (26).

4. Amortisseur à friction selon l'une quelconque des revendications 1 à 3, caractérisé en ce que la chambre collectrice de graisse (27) est partiellement remplie de graisse (33).

5. Amortisseur à friction selon l'une quelconque des revendications 1 à 4, caractérisé en ce que, sur le côté de la garniture de friction (20, 21) opposée au prolongement tubulaire (24) est disposée une chambre à graisse (22) dont le volume est égal à au moins 30 % du volume de la garniture de friction (20 ou 21).

6. Amortisseur à friction selon l'une quelconque des revendications 1 à 5, caractérisé en ce que la garniture de friction (20 respectivement 21) est constituée par une mousse cellulaire en matière plastique.

FIG.1

FIG.2

FIG.3